# EUROPÄISCHE PATENTSCHRIFT

(11) **EP 2 697 173 B1**
(45) Veröffentlichungstag und Bekanntmachung des Hinweises auf die Patenterteilung: **21.11.2018**
(21) Anmeldenummer: 12715002.7
(22) Anmeldetag: 02.04.2012
(51) Int. Cl.: C02F 3/30, C02F 3/12, C02F 103/36, C02F 101/18, C02F 101/34

(54) **VERFAHREN ZUR BIOLOGISCHEN REINIGUNG VON KOKEREIABWASSER**
PROCESS FOR BIOLOGICAL PURIFICATION OF COKING PLANT WASTEWATER
PROCÉDÉ D'ÉPURATION BIOLOGIQUE D'EAUX RÉSIDUAIRES DE COKERIE

(30) Priorität: 11.04.2011 DE 102011001962
(43) Veröffentlichungstag der Anmeldung: 19.02.2014
(73) Patentinhaber: thyssenkrupp Industrial Solutions AG, 45143 Essen (DE)
(72) Erfinder: THIELERT, Holger, 44379 Dortmund (DE)
(74) Vertreter: Lorenz, Bernd Ingo Thaddeus
(86) Internationale Anmeldenummer: PCT/EP2012/055986
(87) Internationale Veröffentlichungsnummer: WO 2012/139917

(56) Entgegenhaltungen:
- DE-A1- 10 318 736
- DE-A1- 19 842 332
- DE-U1-202009 013 628
- JP-A- H1 142 497
- JP-A- H02 245 296
- DATABASE WPI Week 199638 Thomson Scientific, London, GB; AN 1996-382798 XP002685026, & RU 2 049 740 C1 (E COAL CHEM RES INST) 10. Dezember 1995 (1995-12-10) -& RU 2 049 740 C1 (VOSTOCH NI UGLEKHIM I [RU]) 10. Dezember 1995 (1995-12-10)

## Beschreibung

Die Erfindung betrifft ein Verfahren zur biologischen Reinigung von Kokereiabwasser, das mit Stickstoffverbindungen, Cyaniden, Phenolen und Sulfiden belastet ist.

Wegen ihrer hohen Konzentration an toxischen Inhaltsstoffen, welche eine Nitrifikation hemmen, zählen Kokereiabwässer zu den besonders problematischen Industrieabwässern. Bei einer Behandlung mit konventionellen biologischen Verfahren sind schwach belastete und damit großvolumige Bioreaktoren in Beton-Beckenbauweise erforderlich. Empfindliche biologische Vorgänge, wie zum Beispiel die Nitrifikation, sind immer durch Stoßbelastungen mit kritischen Stoffen, zum Beispiel Cyanid und Phenol, gefährdet. Durch Auftrennung der Behandlung in eine erste biologische Stufe für den Abbau organischer Verbindungen, Hydrolyse und Denitrifikation und eine zweite Nitrifikationsstufe sowie Verbindung beider Stufen über einen Nitratrücklauf, verringert sich der Volumenbedarf für die Bioreaktoren und bleiben empfindliche, langsam wachsende autotrophe Bakterien vor Schädigung durch Cyanid, Phenol und andere Hemmstoffe geschützt.

Sowohl der erforderliche Platzbedarf als auch der Umfang für die Betonbauarbeiten für dieses Verfahrenskonzept sind dennoch außergewöhnlich groß und damit extrem kostenintensiv. Aufgrund des häufig eingeschränkten Platzangebotes in einer Kokerei eignet sich die beschriebene Abwasserbehandlung nicht für existierende Kokereien.

Aus DE 103 18 736 A1 ist ein Verfahren zur Reinigung von Kokereiabwasser bekannt, bei dem das zu reinigende Abwasser einen in einen Flüssigkeitskreislauf eingebundenen Reaktor durchströmt, der gasdurchlässige und innenseitig von einem sauerstoffhaltigen Gas durchströmte Membranschläuche enthält. An der flüssigkeitsumströmten Außenseite der Membranschläuche wird ein Biofilm aufrechterhalten, in dem eine selektive Nitrifikation von in Abwasser enthaltenen stickstoffhaltigen Verbindungen zu Nitraten stattfindet und gleichzeitig in einem sauerstoffarmen Außenbereich des Biofilms eine Denitrifikation von Nitraten zu elementarem Stickstoff erfolgt. In der Praxis hat sich das Verfahren nicht durchsetzen können. Die Ausbildung und Aufrechterhaltung eines definierten Biofilms erweist sich als schwierig. Des Weiteren ist es schwierig die erforderlichen Austauschflächen für die Nitrifikation und Denitrifikation an den Membranoberflächen zur Verfügung zu stellen.

Bei einem aus DE 198 42 332 A1 bekannten Verfahren zur biologischen Abwasserreinigung wird ein Reaktor verwendet, der eine Begasungszone zum Einbringen eines gasförmigen Oxidationsmittels in die zu reinigende Flüssigkeit bzw. zur optimalen Versorgung der Biomasse mit Substrat und eine Reaktionszone für den Abbau der Verunreinigungen aufweist. Das Flüssigkeitsgemisch wird aus der Reaktionszone in die Begasungszone zurückgeführt und dort wiederum mit Gas und Substrat angereichert. Bei diesem Verfahren erfolgt eine strikte Trennung zwischen der Begasungszone, in der das Gas in die Flüssigkeit eingebracht und mit dieser vermischt wird, und der Reaktionszone, in der die Verunreinigungen biologisch abgebaut werden. Das Verfahren kann zur biologischen Reinigung von kommunalen Abwässern eingesetzt werden. Im Falle einer biologischen Reinigung von Kokereiabwasser verbleibt das Problem, dass das Kokereiabwasser mit Schadstoffen belastet ist, welche die Nitrifikation hemmen.

Bei einem aus RU 2 049 740 C1 bekannten Verfahren zur biologischen Reinigung von Kokereiabwasser, welches mit Stickstoffverbindungen, Cyaniden und Phenolen belastet ist, wird das Kokereiabwasser in einem ersten Schritt biologisch behandelt und nachfolgend durch Nitrifikation und Denitrifikation gereinigt.

Vor diesem Hintergrund liegt der Erfindung die Aufgabe zugrunde, ein Verfahren zur biologischen Reinigung von Kokereiabwasser anzugeben, welches sich in einer kompakten Anlage realisieren lässt und bei einem eingeschränkten Platzangebot in einer existierenden Kokerei eingesetzt werden kann.

Gegenstand der Erfindung und Lösung dieser Aufgabe ist ein Verfahren nach Anspruch 1.

Gemäß dem erfindungsgemäßen Verfahren wird das Kokereiabwasser zur Entfernung von Schadstoffen, die eine Nitrifikation hemmen, zusammen mit einem Biomasse enthaltenden Stoffstrom einem Entgiftungsreaktor zugeführt, der eine Begasungszone und eine Reaktionszone aufweist. Das dem Entgiftungsreaktor zugeführte Aufgabegemisch wird in der Begasungszone mit einem gasförmigen Oxidationsmittel beaufschlagt. Ein mit dem Oxidationsmittel angereicherter Stoffstrom wird der Reaktionszone zugeführt, in der Cyanide und andere die Nitrifikation hemmende Schadstoffe biologisch abgebaut werden. Aus der Reaktionszone wird ein Stoffstrom abgezogen und in den Reaktor zurückgeführt. Ferner wird ein Abwasserstrom aus dem Entgiftungsreaktor mittels einer Membranfiltration in einen Biomasse enthaltenden Retentatstrom und einen gereinigten Permeatstrom aufgetrennt. Aus dem Retentatstrom wird ein Teilstrom, der Überschussschlamm mitführt, ausgeschleust. Der Retentatstrom wird nach Abtrennung des Teilstroms in den Entgiftungsreaktor zurückgeführt. Der Permeatstrom wird schließlich durch Nitrifikation und eine auf die Nitrifikation folgende Denitrifikation gereinigt.

Der Entgiftungsreaktor teilt sich in eine Begasungszone zum Einbringen des Gases in die Flüssigkeit bzw. zur optimalen Substratversorgung der Biomasse und eine Reaktionszone für den Abbau der Verunreinigungen auf. Der Entgiftungsreaktor bildet eine erste Reinigungsstufe, in der die Denitrifikation hemmenden Schadstoffe abgebaut werden, so dass von diesen keine Negativwirkungen mehr zu erwarten sind. Sowohl die Phenol- als auch die Cyanidgehalte des aus dem Entgiftungsreaktor abgeführten und der Membranfiltration zugeführten Stoffstromes können unter die Hemmkonzentration für Nitrifikanten reduziert werden. Es lässt sich ein nahezu vollständiger Cyanidabbau sowie ein weitgehend vollständiger Phenolabbau erreichen. Zusätzlich wird der CSB-Gehalt durch die biologische Behandlung im Entgiftungsreaktor um 60 bis 80% reduziert. Organische Stickstoffverbindungen werden aufgespalten, so dass nahezu der gesamte Stickstoff im Ablauf des Entgiftungsreaktors als NH₄-Stickstoff vorliegt.

Als Biomasse für den Betrieb des Entgiftungsreaktors wird erfindungsgemäß Belebtschlamm aus kommunalen Anlagen verwendet, der über einen mehrwöchigen Adaptionszeitraum an das Kokereiabwasser adaptiert wird.

Das aus dem Entgiftungsreaktor abgezogene Abwasser wird durch eine Membranfiltration nachgereinigt. Die Membranfiltration dient der Abscheidung und Aufkonzentrierung von Biomasse. Vorzugsweise besteht die Membranfiltration aus einer Ultrafiltration, wobei Module mit flüssigkeitsüberströmten Membranen verwendet werden. Die Überströmgeschwindigkeit an den Membranen wird durch einen im Kreislauf geführten Flüssigkeitsmengenstrom eingestellt. Durch Steuerung der Zu- und Abflüsse kann der Gehalt an Biomasse in dem kontinuierlich abgezogenen Retentatstrom auf einen definierten Wert eingestellt werden. Vorzugsweise wird das Retentat mit einem Gehalt an Biomasse von 10 bis 30 g/l in den Entgiftungsreaktor zurückgeführt.

Die Nitrifikation sowie die nachfolgende Denitrifikation können in klassischer Beckentechnologie mit Nachklärung ausgeführt werden. Gemäß einer bevorzugten Ausführung der Erfindung wird die Nitrifikation in einem Nitrifikationsreaktor durchgeführt, der ebenfalls eine Begasungszone und eine Reaktionszone aufweist, wobei ein Stoffstrom aus der Reaktionszone in die Begasungszone zurückgeführt und dort mit einem gasförmigen Oxidationsmittel sowie dem aufgegebenen Permeatstrom angereichert wird. Ein weiterer Stoffstrom wird aus der Reaktionszone des Nitrifikationsreaktors einem Klärbecken zugeführt, welches als Denitrifikationsstufe betrieben wird. Ein Biomasse mitführender Stoffstrom wird aus der Denitrifikationsstufe in den Nitrifikationsreaktor zurückgeführt. Ferner wird ein biologisch gereinigter Abwasserstrom aus der Denitrifikationsstufe abgezogen.

Der biologisch gereinigte Abwasserstrom wird vorzugsweise mittels Membranfiltration nachgereinigt. Dabei wird der Abwasserstrom in einen Biomasse enthaltenden Retentatstrom und einen gereinigten Permeatstrom aufgetrennt. Aus dem Retentatstrom wird ein Teilstrom, der Überschussschlamm mitführt, ausgeschleust. Der Retentatstrom wird dann nach Abtrennen des Teilstroms in die Denitrifikationsstufe zurückgeführt. Die der Denitrifikation nachgeschaltete Membranfiltration wird vorzugsweise als Ultrafiltration betrieben, wobei Module mit flüssigkeitsüberströmten Membranen verwendet werden und die Überströmgeschwindigkeit an den Membranen durch einen im Kreislauf geführten Flüssigkeitsmengenstrom eingestellt wird.

Die Reaktionszone und die Begasungszone sowohl des Entgiftungsreaktors als auch des Nitrifikationsreaktors sind zweckmäßig durch eine Düse verbunden, in der Flüssigkeit aus dem Zulauf in die Begasungszone eingebracht wird. Durch die in der Düse erzeugte Strömung wird dabei Flüssigkeit aus der Reaktionszone mitgerissen. Die Reaktoren werden so betrieben, dass eine strikte Trennung zwischen der Begasungszone und der Reaktionszone, in der die Verunreinigungen biologisch abgebaut werden, erfolgt. Dabei sind die Begasungszone und die Reaktionszone nicht nur zur Überführung der Flüssigkeit, sondern darüber hinaus über eine Rückkopplung miteinander verbunden. Ein Teil der Flüssigkeit kreist ständig zwischen Begasungszone und Reaktionszone, während zugleich Abwasser und Biomasse zugeführt und gereinigtes Wasser über einen Ablauf abgeführt wird.

Aus dem Permeatfluss, der bei der Membranfiltration hinter dem Entgiftungsreaktor anfällt, kann ein Teilstrom abgezweigt und der Denitrifikationsstufe unmittelbar zugeführt werden. Dieser Teilstrom kann als Kohlenstoffquelle in der Denitrifikation genutzt werden.

Die Anlage zur Durchführung des erfindungsgemäßen Verfahrens umfasst einen Entgiftungsreaktor zur Entfernung von Schadstoffen, die eine Nitrifikation hemmen, eine Anlage für eine Membranfiltration eines im Entgiftungsreaktor vorgereinigten Abwasserstroms sowie eine Anlage zur biologischen Abwasserreinigung eines bei der Membranfiltration anfallenden Permeatstroms durch Nitrifikation und Denitrifikation. Der Entgiftungsreaktor weist dabei den zuvor beschriebenen Aufbau auf und enthält eine obere Reaktionszone, eine untere Reaktionszone sowie eine Einrichtung zur Rückführung von Flüssigkeit aus der Reaktionszone in die Begasungszone.

Die dem Entgiftungsreaktor nachgeschaltete biologische Abwasserreinigungsanlage weist vorzugsweise einen Nitrifikationsreaktor auf, der ebenfalls eine obere Reaktionszone, eine untere Begasungszone und eine Zuführeinrichtung für ein gasförmiges Oxidationsmittel sowie eine Einrichtung zur Rückführung von Flüssigkeit aus der Reaktionszone in die Begasungszone aufweist.

In der Reaktionszone und der Begasungszone des Entgiftungsreaktors und/ oder des Nitrifikationsreaktors ist zweckmäßig jeweils ein Schlaufenrohr zur Erzeugung einer Flüssigkeitszirkulation angeordnet. Zwischen den beiden Zonen befindet sich eine Düse, in der Flüssigkeit aus dem Rücklauf und Kokereiabwasser bzw. ein vorgereinigter Abwasserstrom aus dem Entgiftungsreaktor Flüssigkeit aus dem oberen Schlaufenrohr mitreißt und in die Begasungszone fördert.

Dem Nitrifikationsreaktor kann ein als Denitrifikationsstufe betriebenes Klärbecken nachgeschaltet werden, wobei ein Biomasse enthaltender Stoffstrom aus dem Klärbecken in den Nitrifikationsreaktor zurückführbar ist. Der Denitrifikationsstufe ist zweckmäßig eine Anlage zur Membranfiltration eines aus dem Klärbecken abgezogenen gereinigten Abwasserstroms zugeordnet.

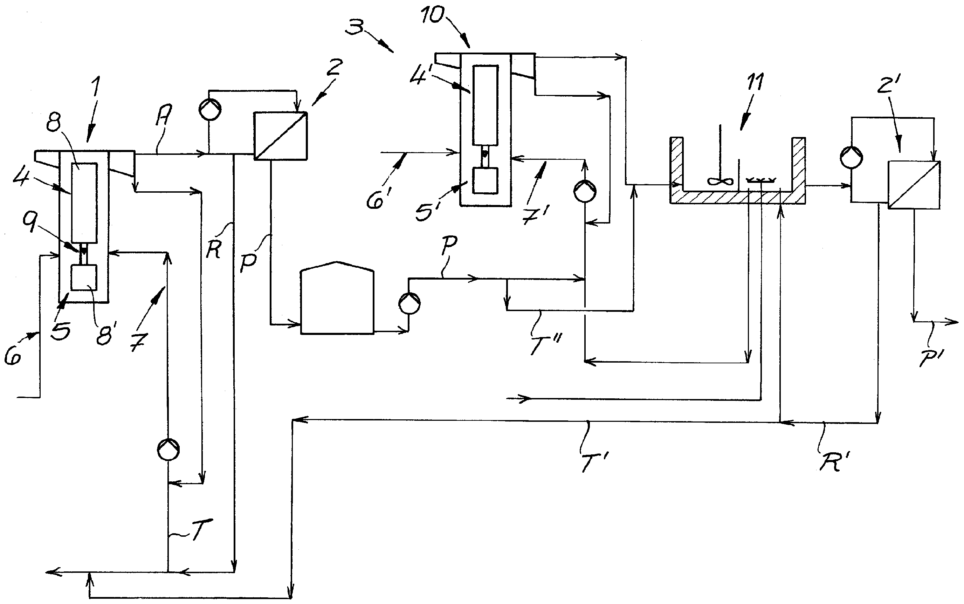

Im Folgenden wird die Erfindung anhand einer lediglich ein Ausführungsbeispiel darstellenden Zeichnung erläutert. Die einzige Figur zeigt schematisch eine Anlage zur biologischen Reinigung von Kokereiabwasser, das mit Stickstoffverbindung, Cyaniden, Phenolen und Sulfiden belastet ist.

Die in der Figur dargestellte Anlage umfasst einen Entgiftungsreaktor 1 zur Entfernung von Schadstoffen, die eine Nitrifikation hemmen, eine Anlage 2 für eine Membranfiltration eines im Entgiftungsreaktor 1 vorgereinigten Abwasserstroms sowie eine Anlage 3 zur biologischen Abwasserreinigung eines bei der Membranfiltration anfallenden Permeatstroms P durch Nitrifikation und Denitrifikation. Der Entgiftungsreaktor 1 weist eine obere Reaktionszone 4, eine untere Begasungszone 5 mit einer Zuführeinrichtung 6 für ein gasförmiges Oxidationsmittel sowie eine Einrichtung 7 zur Rückführung von Flüssigkeit aus der Reaktionszone 4 in die Begasungszone 5 auf. In der Reaktionszone 4 und der Begasungszone 5 des Entgiftungsreaktors 1 ist jeweils ein Schlaufenrohr 8, 8' zur Erzeugung einer Flüssigkeitszirkulation angeordnet. Zwischen den beiden Zonen 4, 5 befindet ist ferner eine Düse 9 vorgesehen, in der Flüssigkeit aus dem Rücklauf und das zu reinigende Kokereiabwasser Flüssigkeit aus dem oberen Schlaufenrohr 8 mitreißt und in die Begasungszone 5 fördert.

Das Kokereiabwasser wird zur Entfernung von Cyanid, Phenol und etwaigen weiteren Schadstoffen, die eine Nitrifikation hemmen, zusammen mit einem Biomasse enthaltenden Stoffstrom dem Entgiftungsreaktor 1 zugeführt. Das dem Entgiftungsreaktor 1 zugeführte Aufgabegemisch wird in der Begasungszone 5 mit einem gasförmigen Oxidationsmittel beaufschlagt. Ein mit dem Oxidationsmittel angereicherter Stoffstrom wird der Reaktionszone 4 des Entgiftungsreaktors 1 zugeführt, in der Cyanide und andere die Nitrifikation hemmende Schadstoffe biologisch abgebaut werden. Aus der Reaktionszone 4 wird ein Stoffstrom abgezogen und in den Entgiftungsreaktor 1 zurückgeführt. Ferner wird ein Abwasserstrom A aus dem Entgiftungsreaktor 1 mittels Membranfiltration in ein Biomasse enthaltenden Retentatstrom R und einen gereinigten Permeatstrom P aufgetrennt. Aus dem Retentatstrom R wird ein Teilstrom T, der Überschussschlamm mitführt, ausgeschleust. Der Retentatstrom R wird nach Abtrennung dieses Teilstroms T in den Entgiftungsreaktor 1 zurückgeführt. Der Permeatstrom P wird durch Nitrifikation und nachfolgende Denitrifikation gereinigt.

Die dem Entgiftungsreaktor 1 nachgeschaltete biologische Abwasserreinigungsanlage 3 weist einen Nitrifikationsreaktor 10 auf, der ebenfalls eine obere Reaktionszone 4', eine untere Begasungszone 5' mit einer Zuführeinrichtung 6' für ein gasförmiges Oxidationsmittel sowie eine Einrichtung 7' zur Rückführung von Flüssigkeit aus der Reaktionszone 4' in die Begasungszone 5' aufweist. Aus der Reaktionszone 4' wird ein Stoffstrom in die Begasungszone 5' zurückgeführt und dort mit gasförmigem Oxidationsmittel sowie dem aufgegebenen Permeatstrom P angereichert. Ein weiterer Stoffstrom wird aus der Reaktionszone des Nitrifikationsreaktors einem Klärbecken 11 zugeführt, welches als Denitrifikationsstufe betrieben wird. Ein Biomasse mitführender Stoffstrom wird aus der Denitrifikationsstufe in den Nitrifikationsreaktor 10 zurückgeführt. Ferner wird ein biologisch gereinigter Abwasserstrom aus der Denitrifikationsstufe abgezogen und einer nachgeschalteten Membranfiltration 2' zugeführt. Der Abwasserstrom wird durch Membranfiltration 2' in einen Biomasse enthaltenden Retentatstrom R' und einen gereinigten Permeatstrom P' aufgetrennt. Aus dem Retentatstrom R' wird ein Teilstrom T', der Überschussschlamm mitführt, ausgeschleust. Nach Abtrennung dieses Teilstromes T' wird der Retentatstrom R' in die Denitrifikationsstufe zurückgeführt.

Dem in der Figur dargestellten Anlagenschema ist zu entnehmen, dass aus dem Permeatstrom P, der bei der Membranfiltration hinter dem Entgiftungsreaktor 1 anfällt, ein Teilstrom T" abgezweigt und der Denitrifikationsstufe unmittelbar zugeführt werden kann. Der Teilstrom T" kann als Kohlenstoffquelle in der Denitrifikation genutzt werden.

Die in der Figur dargestellte biologische Abwasserreinigung umfasst eine Membranfiltration 2, die dem Entgiftungsreaktor 1 nachgeschaltet ist sowie eine weitere Membranfiltration 2', die dem als Denitrifikationsstufe betriebenen Klärbecken 11 zugeordnet ist. Die Membranfiltration 2, 2' wird vorzugsweise als Ultrafiltration betrieben, wobei Module mit flüssigkeitsüberströmten Membranen verwendet werden. Die Überströmgeschwindigkeit an der Membran kann durch einen im Kreislauf geführten Flüssigkeitsmengenstrom eingestellt werden. Durch Regelung der Zu- und Abflüsse kann die Eindickung, d.h. der Gehalt an Biomasse im Retentatstrom R, R', beeinflusst werden.

## Patentansprüche

1. Verfahren zur biologischen Reinigung von Kokereiabwasser, das mit Stickstoffverbindungen, Cyaniden, Phenolen und Sulfiden belastet ist,
wobei das Kokereiabwasser zur Entfernung von Schadstoffen, die eine Nitrifikation hemmen, zusammen mit einem Biomasse enthaltenden Stoffstrom einem Entgiftungsreaktor zugeführt wird, der eine Begasungszone und eine Reaktionszone aufweist,
wobei das dem Entgiftungsreaktor zugeführte Aufgabegemisch in der Begasungszone mit einem gasförmigen Oxidationsmittel beaufschlagt wird und ein mit dem Oxidationsmittel angereicherter Stoffstrom der Reaktionszone zugeführt wird, in der Cyanide und andere die Nitrifikation hemmende Schadstoffe biologisch abgebaut werden,
wobei aus der Reaktionszone ein Stoffstrom abgezogen und in den Entgiftungsreaktor zurückgeführt wird,
wobei ein Abwasserstrom aus dem Entgiftungsreaktor mittels einer Membranfiltration in einen Biomasse enthaltenden Retentatstrom und einen gereinigten Permeatstrom aufgetrennt wird,
wobei aus dem Retentatstrom ein Teilstrom, der Überschussschlamm mitführt, ausgeschleust wird und der Retentatstrom nach Abtrennen des Teilstroms in den Entgiftungsreaktor zurückgeführt wird
wobei für die Membranfiltration Module mit flüssigkeitsüberströmten Membranen verwendet werden und die Überströmgeschwindigkeit an den Membranen durch einen im Kreislauf geführten Flüssigkeitsmengenstrom eingestellt wird,
wobei der Permeatstrom durch Nitrifikation mit nachfolgender Denitrifikation gereinigt wird und wobei Biomasse für den Betrieb des Entgiftungsreaktors Belebtschlamm aus kommunalen Anlagen verwendet wird, der über einen mehrwöchigen Adaptionszeitraum an das Kokereiabwasser adaptiert wird.

2. Verfahren nach Anspruch 1, **dadurch gekennzeichnet, dass** die Nitrifikation in einem Nitrifikationsreaktor durchgeführt wird, der eine Begasungszone und eine Reaktionszone aufweist, dass ein Stoffstrom aus der Reaktionszone in die Begasungszone zurückgeführt und dort mit einem gasförmigen Oxidationsmittel sowie dem Permeatstrom angereichert wird, dass ein weiterer Stoffstrom aus der Reaktionszone des Nitrifikationsreaktors einem Klärbecken zugeführt wird, welches als Denitrifikationsstufe betrieben wird, dass ein Biomasse mitführender Stoffstrom aus der Denitrifikationsstufe in den Nitrifikationsreaktor zurückgeführt wird und dass ein biologisch gereinigter Abwasserstrom aus der Denitrifikationsstufe abgezogen wird.

3. Verfahren nach einem der Ansprüche 1 oder 2, **dadurch gekennzeichnet, dass** die Reaktionszone und die Begasungszone des Entgiftungsreaktors und/oder des Nitrifikationsreaktors durch eine Düse verbunden sind, in der Flüssigkeit aus dem Zulauf in die Begasungszone eingebracht wird, wobei durch die in der Düse erzeugte Strömung Flüssigkeit aus der Reaktionszone mitgerissen wird.

4. Verfahren nach Anspruch 2 oder 3, **dadurch gekennzeichnet, dass** aus dem Permeatstrom, der bei der Membranfiltration hinter dem Entgiftungsreaktor anfällt, ein Teilstrom abgezweigt und der Denitrifikationsstufe unmittelbar zugeführt wird.

5. Verfahren nach einem der Ansprüche 2 bis 4, **dadurch gekennzeichnet, dass** der Abwasserstrom mittels Membranfiltration nachgereinigt wird.

6. Verfahren nach Anspruch 5, **dadurch gekennzeichnet, dass** der Abwasserstrom in einen Biomasse enthaltenden Retentatstrom und einen gereinigten Permeatstrom aufgetrennt wird, wobei aus dem Retentatstrom ein Teilstrom, der Überschussschlamm mitführt, ausgeschleust wird und wobei der Retentatstrom nach Abtrennen des Teilstroms in die Denitrifikationsstufe zurückgeführt wird.

7. Verfahren nach Anspruch 6, **dadurch gekennzeichnet, dass** für die Membranfiltration Ultrafiltrationsmembranen verwendet werden.

## Claims

1. A method for the biological purification of coking plant wastewater which is contaminated with nitrogen compounds, cyanides, phenols and sulphides,
wherein the coking plant wastewater is fed for removal of contaminants that inhibit nitrification, along with a material flow containing biomass, to a detoxification reactor that has a gasification zone and a reaction zone,
wherein the feed mixture fed to the detoxification reactor is exposed in the gasification zone to a gaseous oxidizing agent and a material flow enriched with the oxidizing agent is fed to the reaction zone, in which cyanides and other harmful substances inhibiting nitrification are biodegraded,
wherein a material flow is removed from the reaction zone and fed back to the detoxification reactor,
wherein a wastewater flow from the detoxification reactor is separated by means of membrane filtration into a retained material flow containing biomass and a purified permeate flow,
wherein a partial flow that carries along excess sludge is expelled from the retained material flow and the retained material flow is fed back into the detoxification reactor after the partial flow has been separated off
wherein modules with membranes over which liquid flows are used for membrane filtration and the overflow speed on the membranes is set by a liquid volume flow guided in the cycle,
wherein the permeate flow is purified by nitrification with subsequent denitrification and wherein biomass for operating the detoxification reactor uses activated sludge from municipal installations which is adapted over an adaptation period lasting several weeks to the coking plant wastewater.

2. The method according to claim 1, **characterized in that** the nitrification is carried out in a nitrification reactor which comprises a gasification zone and a reaction zone, that a material flow is fed back from the reaction zone into the gasification zone and is enriched there with a gaseous oxidising means, that a further material flow from the reaction zone of the nitrification reactor is fed to a settlement tank which is operated as the denitrification stage, that a biomass with accompanying material flow is fed back from the denitrification stage into the nitrification reactor and that a biologically purified wastewater flow is removed from the denitrification stage.

3. The method according to one of claims 1 or 2, **characterized in that** the reaction zone and the gasification zone of the detoxification reactor and/or of the nitrification reactor are connected by a nozzle in which liquid from the intake is introduced into the gasification zone, wherein the flow generated in the nozzle causes liquid to be entrained from the reaction zone.

4. The method according to claim 2 or 3, **characterized in that** a partial flow branches off from the permeate flow which occurs during membrane filtration downstream of the detoxification reactor and is immediately fed to the denitrification stage.

5. The method according to one of claims 2 to 4, **characterized in that** the wastewater flow is purified subsequently by means of membrane filtration.

6. The method according to claim 5, **characterized in that** the wastewater flow is separated into a retained material flow containing biomass and a purified permeate flow, wherein a partial flow which carries along excess sludge is expelled from the retained material flow and wherein the retained material flow is fed back to the denitrification stage after the partial flow has been separated.

7. The method according to claim 6, **characterized in that** ultrafiltration membranes are used for membrane filtration.

## Revendications

1. Procédé d'épuration par voie biologique d'effluents de cokerie qui sont pollués par des composés azotés, des cyanures, des phénols et des sulfures,
lors duquel, pour éliminer des polluants qui inhibent une nitrification, on alimente les effluents de cokerie en commun avec un flux de substances contenant une biomasse vers un réacteur de dépollution qui comporte une zone de gazéification et une zone de réaction,
lors duquel, dans la zone de gazéification, on expose le mélange amené au réacteur de dépollution à un agent oxydant gazeux et dans la zone de réaction, on alimente un flux de substances enrichi avec l'agent oxydant dans lequel du cyanure et d'autres polluants inhibant la nitrification sont biologiquement dégradés,
lors duquel, on soutire de la zone de réaction un flux de substances et on le ramène dans le réacteur de dépollution,
lors duquel, au moyen d'une filtration par membrane, on sépare un flux d'effluents du réacteur de dépollution en un flux de rétentat contenant une biomasse et un flux de perméat épuré,
lors duquel, on écluse du flux de rétentat un flux partiel qui véhicule de la boue excédentaire et après séparation du flux partiel, on ramène le flux de rétentat dans le réacteur de dépollution,
lors duquel, pour la filtration par membrane, on utilise des modules avec des membranes submergées de liquide et on règle la vitesse de submersion sur les membranes par un débit de liquide conduit dans le circuit,
lors duquel, on épure le flux de perméat par nitrification, suivie d'une dénitrification et lors duquel on utilise comme biomasse pour faire fonctionner le réacteur de dépollution une boue activée provenant d'installations communales, que l'on adapte aux effluents de cokerie sur une période d'adaptation de plusieurs semaines.

2. Procédé selon la revendication 1, **caractérisé en ce qu'**on procède à la nitrification dans un réacteur de nitrification qui comporte une zone de gazéification et une zone de réaction, **en ce qu'**on ramène un flux de substances hors de la zone de réaction dans la zone de gazéification et on l'y enrichit avec un agent oxydant gazeux, ainsi qu'avec le flux de perméat, **en ce qu'**on alimente un flux de substances supplémentaire hors de la zone de réaction du réacteur de nitrification vers un bassin de décantation que l'on fait fonctionner comme une étape de dénitrification, **en ce qu'**on ramène un flux de substances véhiculant une biomasse hors de l'étape de dénitrification dans le réacteur de nitrification et **en ce qu'**on soutire de l'étape de dénitrification un flux d'effluents épuré par voie biologique.

3. Procédé selon l'une quelconque des revendications 1 ou 2, **caractérisé en ce que** la zone de réaction et la zone de gazéification du réacteur de dépollution et/ou du réacteur de nitrification sont reliées par une buse dans laquelle on introduit du liquide provenant de l'afflux dans la zone de gazéification, le courant généré dans la buse entraînant du liquide hors de la zone de réaction.

4. Procédé selon la revendication 2 ou 3, **caractérisé en ce qu'**à partir du flux de perméat qui se produit lors de la filtration par membrane en aval du réacteur de dépollution, on fait dériver un flux partiel et on l'alimente directement vers l'étape de dénitrification.

5. Procédé selon l'une quelconque des revendications 2 à 4, **caractérisé en ce qu'**on réépure le flux d'effluents au moyen d'une filtration par membrane.

6. Procédé selon la revendication 5, **caractérisé en ce qu'**on sépare le flux d'effluents en un flux de rétentat contenant une biomasse et en un flux de perméat épure, lors duquel on écluse hors du flux de rétentat un flux partiel, la boue excédentaire et lors duquel, après séparation du flux partiel, on ramène le flux de rétentat vers l'étape de dénitrification.

7. Procédé selon la revendication 6, **caractérisé en ce qu'**on utilise pour la filtration par membrane des membranes d'ultrafiltration.
